# FASCICULE DE BREVET EUROPEEN

(11) **EP 3 075 606 B1**
(45) Date de publication et mention de la délivrance du brevet: **23.01.2019**
(21) Numéro de dépôt: 16163459.7
(22) Date de dépôt: 31.03.2016
(51) Int. Cl.: B60R 19/52, B60K 11/08

(54) **ENSEMBLE D'HABILLAGE EXTÉRIEUR DE VÉHICULE AUTOMOBILE ET PROCÉDÉ D'UTILISATION ASSOCIÉ**
ANORDNUNG ZUR AUSSENVERKLEIDUNG EINES KRAFTFAHRZEUGS, UND ENTSPRECHENDES VERWENDUNGSVERFAHREN
EXTERIOR TRIM SET OF A MOTOR VEHICLE AND ASSOCIATED METHOD FOR USE

(30) Priorité: 31.03.2015 FR 1552739
(43) Date de publication de la demande: 05.10.2016
(73) Titulaire: Flex-N-Gate France, 25405 Audincourt (FR)
(72) Inventeur: VERBRUGGHE, Jérôme, 90300 ELOIE (FR)
(74) Mandataire: Lavoix

(56) Documents cités:
- WO-A1-2011/009212
- DE-A1-102009 053 769
- DE-T5-112007 001 053
- FR-A1- 2 921 624
- FR-A1- 2 971 743
- FR-A1- 2 972 392

## Description

La présente invention concerne un ensemble d'habillage extérieur de véhicule automobile selon le préambule de la revendication 1.

La présente invention concerne également un procédé d'utilisation de l'ensemble tel que décrit ci-dessus.

Un tel ensemble est par exemple disposé à l'avant d'un véhicule automobile. Un exemple divulguant le préambule de la revendication 1 est connu par FR 2 921 624 A1. L'ouverture permet par exemple le passage d'un organe de remorquage du véhicule. Ainsi, lorsqu'un utilisateur souhaite utiliser l'organe de remorquage du véhicule, il manoeuvre l'élément d'obturation entre ses positions verrouillée et déverrouillée. Lorsque l'organe de remorquage n'est pas utilisé, il est masqué par l'élément d'obturation dans la position verrouillée afin d'améliorer l'esthétisme du véhicule.

Cependant, une telle intégration des éléments d'obturation dans la grille d'entrée d'air est souvent complexe et dégrade l'aspect esthétique de la grille.

L'un des buts de l'invention est de permettre d'obturer de manière réversible et esthétique une ouverture d'accès à un équipement ménagée dans une grille d'entrée d'air et ce sans modifier la structure de la grille d'entrée d'air.

A cet effet, l'invention concerne un ensemble d'habillage extérieur de véhicule automobile du type précité selon la partie caractérisante de la revendication 1.

Ainsi, lorsque l'élément saillant de l'élément d'obturation est retenu dans l'orifice du logement de réception, au moins les extrémités de l'élément saillant sont masquées par le logement de réception, ce qui améliore l'esthétisme de l'ensemble. En outre, un tel ensemble ne modifie pas la structure de la grille d'entrée d'air. De ce fait, l'intégration de l'élément d'obturation est simplifiée.

L'ensemble d'habillage comprend en outre une ou plusieurs des caractéristiques des revendications 2 à 8, prise(s) isolément ou selon toutes les combinaisons techniquement possibles.

L'invention concerne également un procédé d'utilisation selon la revendication 9.

D'autres aspects et avantages de l'invention apparaitront à la lecture de la description qui suit, donnée à titre d'exemple et faite en référence aux dessins annexés, dans lesquels :
- la figure 1 est une représentation schématique d'un exemple d'un ensemble d'habillage extérieur de véhicule automobile selon l'invention,
- la figure 2 est une représentation schématique vue de face d'un prolongement d'un logement de réception de l'ensemble de la figure 1,
- la figure 3 est une représentation schématique d'un élément d'obturation de l'ensemble de la figure 1, et
- la figure 4 est une représentation schématique d'une partie de l'ensemble de la figure 1, l'élément d'obturation étant dissocié du logement de réception.

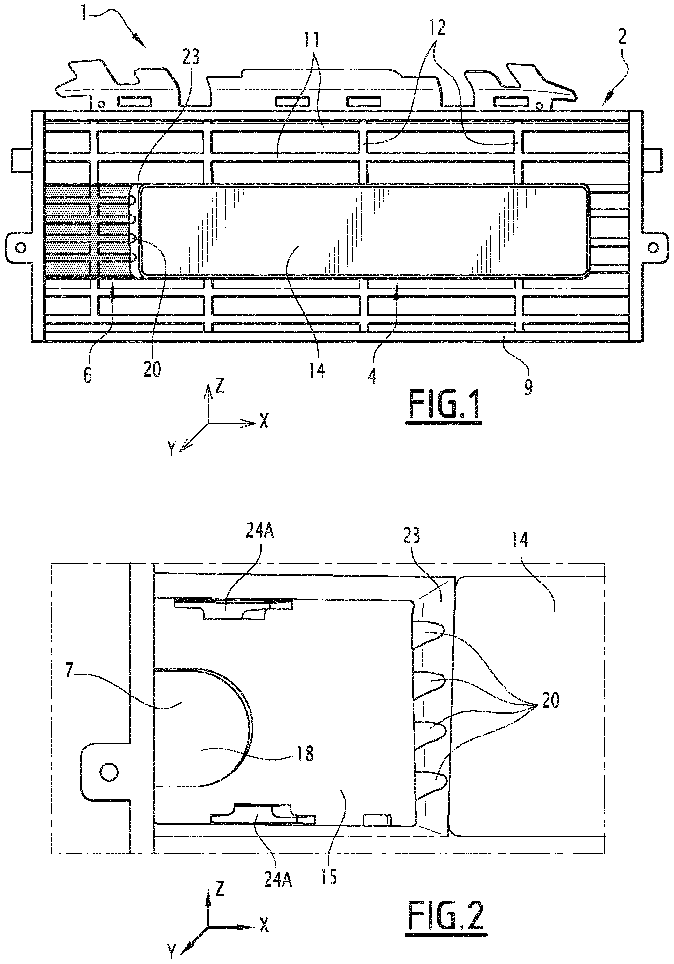

Un ensemble d'habillage extérieur 1 de véhicule automobile est représenté sur la figure 1.

L'ensemble d'habillage 1 est destiné à être disposé à l'extérieur d'un véhicule automobile, par exemple, à l'avant ou à l'arrière du véhicule automobile et de préférence en vis-à-vis d'une bouche d'aération du véhicule automobile.

L'ensemble d'habillage 1 comprend au moins une grille d'entrée d'air 2, au moins un logement de réception 4 d'un élément extérieur et un élément d'obturation 6.

La grille d'entrée d'air 2 est destinée à s'étendre en travers d'une bouche d'aération d'un véhicule automobile, par exemple, formée dans une peau de pare-choc. En particulier, la grille d'entrée d'air 2 présente sensiblement la même forme que la bouche d'aération du véhicule automobile. Ainsi, la grille d'entrée d'air 2 est configurée pour recouvrir au moins partiellement la bouche d'aération du véhicule automobile afin de permettre le passage de l'air tout en empêchant l'entrée d'objets dans la bouche d'aération.

La grille 2 est, par exemple, réalisée d'une seule pièce en matériaux plastiques injectés ou moulés.

Dans la suite de la description, il est défini une direction longitudinale X représentée sur les figures 1 et 2 par un axe X et correspondant à la longueur de la grille 2. Il est, en outre, défini une direction d'élévation Z, perpendiculaire à la direction longitudinale X et représentée sur les figures 1 et 2 par un axe Z. Il est, également, défini une direction transversale Y, perpendiculaire à la direction longitudinale X et à la direction d'élévation Z. La direction transversale Y est représentée sur les figures 1 et 2 par un axe Y. Lorsque le véhicule est monté, la direction longitudinale X correspond par exemple à la largeur du véhicule, la direction transversale Y à l'axe avant arrière du véhicule et la direction d'élévation Z à la hauteur du véhicule.

La grille 2 comprend une ouverture 7, représentée sur la figure 2, et une pluralité d'éléments de décoration 9.

L'ouverture 7 permet le passage d'un équipement. L'équipement est, par exemple, un organe de remorquage du véhicule automobile, tel qu'un anneau de remorquage.

Les éléments de décoration 9 définissent une pluralité d'ouvertures de passage de l'air.

Les éléments de décoration 9 sont agencés les uns par rapport aux autres pour empêcher des objets, tels que des pierres ou autres, ou des déchets de pénétrer dans la bouche d'aération du véhicule, tout en laissant l'air pénétrer dans les ouvertures de passage des éléments de décoration 9.

Les éléments de décoration 9 forment un motif autour de l'ouverture 7 de la grille 2, c'est-à-dire qu'il n'y a pas d'éléments de décoration 9 s'étendant dans l'ouverture 7.

Dans le mode de réalisation illustré sur la figure 1, les éléments de décoration comprennent une pluralité de premiers barreaux 11 horizontaux s'étendant selon la direction longitudinale X et une pluralité de deuxièmes barreaux 12 verticaux s'étendant selon la direction d'élévation Z et perpendiculaires aux premiers barreaux 11. Ainsi, le motif formé par les éléments de décoration 9 est un quadrillage. Dans ce cas, les premiers barreaux 11 et deuxièmes barreaux 12 sont interrompus au niveau de l'ouverture 7 et ne s'étendent pas en travers de celle-ci.

La forme des éléments de décoration 9 représentée sur la figure 1 est purement illustrative et donnée à titre d'exemple non limitatif, d'autres formes pouvant, bien entendu, être envisagées.

En variante, les éléments de décoration 9 comprennent des cadres, par exemple de forme sensiblement ovoïde, rectangulaire ou autres, s'étendant sensiblement transversalement. Dans ce cas, le motif formé est une matrice de cadres.

Selon encore d'autres variantes, le cadre d'au moins certains ou de tous les éléments de décoration 9 peut être plein ou non et comprendre ou non des éléments enjoliveurs ou autres s'étendant à l'intérieur du cadre.

Le logement de réception 4 est destiné à recevoir un élément extérieur. L'élément extérieur est par exemple une plaque d'immatriculation d'un véhicule automobile.

Le logement 4 est fixé sur la grille 2 par exemple au moyen de rivets, de vis, de boulons ou autres.

Selon un autre mode de réalisation, le logement 4 est réalisé d'une seule pièce avec la grille 2, les éléments de décoration 9 de la grille 2 s'étendant autour du logement 4.

Le logement de réception 4 comprend une partie principale 14 et un prolongement 15 (illustré en détails sur la figure 2) s'étendant à partir de la partie principale 14.

La partie principale 14 est configurée pour recevoir et maintenir un élément extérieur, par exemple, une plaque d'immatriculation.

La partie principale 14 présente, par exemple, une longueur selon la direction longitudinale X comprise au sens large entre 50 centimètres (cm) et 60 cm, une largeur selon la direction d'élévation Z comprise au sens large entre 10 cm et 20 cm et une épaisseur selon la direction transversale Y comprise au sens large entre 0,3 cm et 3 cm.

Comme visible sur la figure 2, la partie principale 14 comprend un bord latéral 23 séparant la partie principale 14 du prolongement 15 et au moins un orifice 20 ménagé dans le bord latéral 23.

Le bord latéral 23 s'étend selon la direction d'élévation Z et est en saillie selon la direction transversale Y.

L'orifice 20 est ménagé dans le bord latéral 23 selon l'axe longitudinal X et est ouvert au moins vers le prolongement 15.

L'orifice 20 est propre à retenir l'élément d'obturation 6 dans le prolongement 15 comme cela sera décrit par la suite.

Dans l'exemple illustré sur les figures 1 à 4, la première partie 14 du logement de réception 4 comprend quatre orifices 20. En variante, la première partie 14 comprend un nombre d'orifices 20 égal à deux ou trois, ou un nombre encore supérieur d'orifices 20.

Le prolongement 15 est configuré pour recevoir l'élément d'obturation 6. Le prolongement 15 présente notamment un renfoncement par rapport à la première partie 14, définissant un espace de réception de l'élément d'obturation 6.

Le prolongement 15 présente une surface selon la direction longitudinale X et la direction d'élévation Z sensiblement identique à la surface de l'ouverture 7 de la grille 2.

Le prolongement 15 présente, par exemple, une longueur selon la direction longitudinale X comprise au sens large entre 15 centimètres (cm) et 30 cm, une largeur selon la direction d'élévation Z comprise au sens large entre 5 cm et 20 cm et une épaisseur selon la direction transversale Y comprise au sens large entre 0,3 cm et 5 cm.

Le logement de réception 4 est fixé sur la grille 2 de sorte que le prolongement 15 couvre au moins l'ouverture 7 de la grille 2.

Comme visible sur la figure 2, le prolongement 15 comprend une embouchure 18 en regard de l'ouverture 7 de la grille 2. L'embouchure 18 est, par exemple, de dimensions inférieures ou égales aux dimensions de l'ouverture 7 de la grille 2.

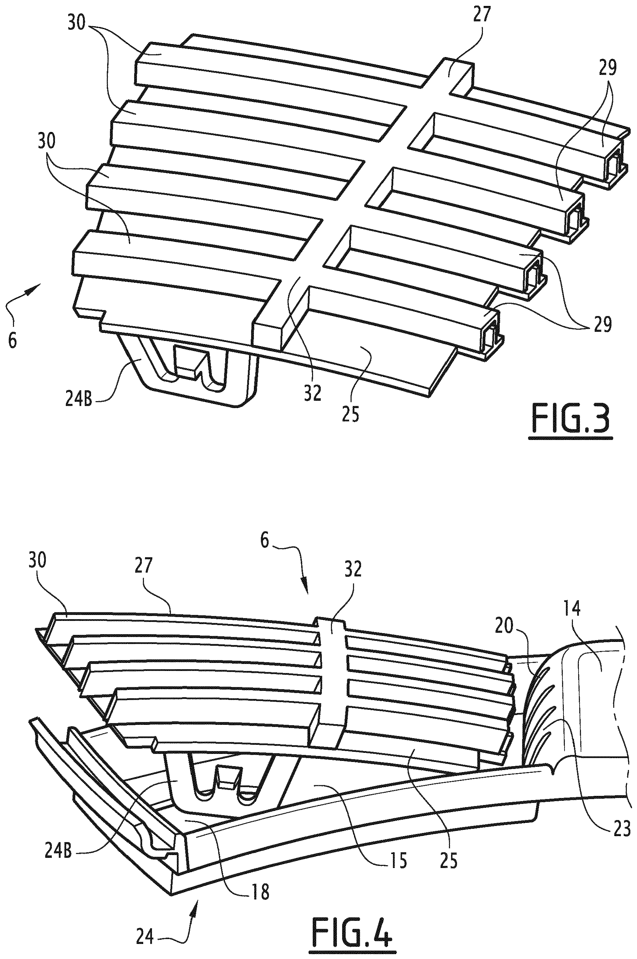

En outre, le prolongement 15 comprend au moins une première pièce 24A d'un organe d'encliquetage 24 de l'élément d'obturation 6 sur le prolongement 15 du logement 4. L'organe d'encliquetage 24 est visible sur la figure 4.

La première pièce 24A de l'organe d'encliquetage 24 est formée dans le prolongement 15 du logement de réception 4.

Dans le mode de réalisation illustré sur la figure 2, l'organe d'encliquetage 24 comprend deux premières pièces 24A sous forme de fentes entièrement évidées selon la direction transversale Y, c'est-à-dire traversant le prolongement 15 selon la direction transversale Y. Les deux premières pièces 24A sont disposées dans le prolongement 15 du logement 4 à des extrémités opposées selon la direction d'élévation Z.

L'organe d'encliquetage 24 est décrit plus en détails lors de la description de l'élément d'obturation 6.

L'élément d'obturation 6 est configuré pour s'étendre dans le logement 4 et pour masquer ainsi de manière réversible l'ouverture 7 de la grille 2.

La surface de l'élément d'obturation 6 selon la direction longitudinale X et la direction d'élévation Z est sensiblement identique à la surface de l'ouverture 7 de la grille 2.

L'élément d'obturation 6 est mobile entre une position verrouillée, visible sur la figure 1 et une position déverrouillée, visible sur la figure 4.

Dans la position verrouillée, l'élément d'obturation 6 est solidaire du prolongement 15 du logement de réception 4 et masque l'ouverture 7 de la grille 2. Ainsi, dans la position verrouillée, l'élément d'obturation 6 recouvre également l'embouchure 18 du prolongement 15.

Dans la position déverrouillée, l'élément d'obturation 6 est déplaçable par rapport au logement de réception 4. L'ouverture 7 de la grille 2 est accessible seulement lorsque l'élément d'obturation 6 est dans la position déverrouillée et que l'élément d'obturation 6 est retiré.

En variante, l'élément d'obturation 6 est fixé directement sur la grille 2 et non sur le prolongement 15.

Comme visible sur la figure 3, l'élément d'obturation 6 comprend un support 25 et au moins un élément saillant 27.

Le support 25 a une forme sensiblement complémentaire de la forme de l'ouverture 7 et/ou du prolongement 15 du logement de réception 4 permettant au support 25 d'être introduit dans l'espace de réception défini par le prolongement 15.

Le support 25 est, par exemple, réalisé en matériaux plastiques injectés ou moulés.

L'élément saillant 27 est, par exemple, rapporté sur le support 25, c'est-à-dire que l'élément saillant 27 est formé d'une pièce différente de celle du support 25 et que ces deux pièces sont fixées ensemble pour former l'élément d'obturation 6.

L'élément saillant 27 est, par exemple, fixé sur le support 25 au moyen d'un mécanisme d'encliquetage, par soudure ou encore par collage.

L'élément saillant 27 est, par exemple, réalisé en polymère thermoplastique, avantageusement en acrylonitrile butadiène styrène, ou encore en un autre matériau.

En variante, l'élément saillant 27 est venu de matière avec le support 25.

L'élément saillant 27 est avantageusement peint ou traité de sorte que la teinte de l'élément saillant 27 soit similaire à la teinte des éléments de décoration 9 de la grille 2. Cela améliore le camouflage de l'élément d'obturation 6 sur la grille 2 et améliore donc l'aspect esthétique de l'ensemble d'habillage 1.

L'élément saillant 27 présente une forme sensiblement complémentaire du motif formé par les éléments de décoration 9 de sorte que, quand l'élément d'obturation 6 est dans la position verrouillée, la grille 2 présente un aspect uniforme. Ainsi, l'élément saillant 27 présente la forme d'une partie d'un ou de plusieurs des éléments de décoration 9, et constitue la surface visible de l'élément d'obturation 6 lorsque l'élément d'obturation 6 est dans la position verrouillée.

En outre, l'élément saillant 27 comprend des extrémités 29 sensiblement complémentaires des orifices 20. Les dimensions des orifices 20 sont ajustées de sorte à recevoir les extrémités 29 de l'élément saillant 27 et à laisser un jeu permettantaux extrémités 29 de glisser hors ou dans le bord latéral 23 de la première partie 14 du logement 4 lorsque l'élément d'obturation 6 est déplacé entre la position déverrouillée et la position verrouillée.

En particulier, dans le mode de réalisation illustré sur les figures 1, 3 et 4, l'élément saillant 27 comprend au moins une première barre horizontale 30 s'étendant selon la direction longitudinale X et au moins une deuxième barre verticale 32 s'étendant selon la direction d'élévation Z. Lorsque l'élément d'obturation 6 est dans la position verrouillée, la première barre 30 s'étend dans la continuité d'au moins un des premiers barreaux 11 des éléments de décoration 9 et la deuxième barre 32 s'étend dans la continuité d'au moins un des deuxièmes barreaux 12 des éléments de décoration 9. Ainsi, dans la position verrouillée, l'élément saillant 27 de l'élément d'obturation 6 permet de compléter le motif formé par les éléments de décoration 9. Dans la position verrouillée, l'ouverture 7 de la grille 2 est donc masquée de manière esthétique grâce à la forme choisie pour l'élément saillant 27 et grâce à l'aspect cohérent de l'élément saillant 27 avec les éléments de décoration 9 de la grille 2.

En outre, dans le mode de réalisation illustré sur la figure 1, au moins une extrémité 29 de l'une des premières barres horizontales 30 de l'élément saillant 27 fait saillie par rapport au support 25 dans la direction longitudinale X de sorte que ladite extrémité 29 soit propre à être introduite dans l'orifice 20. Comme visible sur la figure 1, les extrémités 29 des premières barres 30 sont introduites dans les orifices 20 et l'élément saillant 27 est retenu dans l'orifice 20 au moins dans la position verrouillée de l'élément d'obturation 6. Comme visible sur la figure 4, dans la position déverrouillée, les extrémités 29 des premières barres 30 sont hors des orifices 20 de la première partie 14 du logement 4.

L'élément saillant 27 comprend au moins une deuxième pièce 24B de l'organe d'encliquetage 24 mentionné précédemment.

Dans la position verrouillée, l'organe d'encliquetage 24 est propre à encliqueter l'élément d'obturation 6 dans le prolongement 15 du logement de réception 4.

Dans la position déverrouillée, l'élément d'obturation 6 est décliqueté du logement de réception 4. L'élément d'obturation 6 est alors déplaçable en translation par rapport au logement 4 via les extrémités 29 de l'élément saillant qui sont propres à glisser en translation hors des orifices 20.

La deuxième pièce 24B de l'organe d'encliquetage 24 est solidaire de l'élément d'obturation 6. En outre, la deuxième pièce 24B est complémentaire de la première pièce 24A permettant l'encliquetage de la deuxième pièce 24B dans la première pièce 24A.

Dans le mode de réalisation illustré sur la figure 1, l'organe d'encliquetage 24 comprend deux deuxièmes pièces 24B sous forme de saillie situées sous le support 25 du côté opposé à l'élément saillant 27, comme visible sur les figures 3 et 4. Les deuxièmes pièces 24B sont disposées sous le support 25 de sorte à faire face aux premières pièces 24A lorsque l'élément d'obturation 6 est introduit dans le prolongement 15. Les deuxièmes pièces 24B sont propres à pivoter dans les premières pièces 24A permettant l'introduction et le retrait des extrémités 29 de l'élément saillant 27 dans les orifices 20.

Le fonctionnement de l'ensemble d'habillage 1 va maintenant être décrit.

Initialement, pour masquer l'ouverture 7 de la grille 2, l'élément d'obturation 6 est fixé sur le logement de réception 4 de la manière suivante.

Les extrémités 29 en saillie de l'élément saillant 27 sont introduites dans les orifices 20 par translation.

Puis, les extrémités 29 pivotent dans les orifices 20 autour d'un axe de pivotement dans la direction d'élévation Z et passant par les orifices 20 jusqu'à ce que la deuxième pièce 24B de l'élément d'obturation 6 soit insérée dans la première pièce 24A du logement de réception 4. La deuxième pièce 24B est, ensuite, encliquetée dans la première pièce 24A.

L'élément d'obturation 6 est alors solidaire du logement de réception 4 et obture l'ouverture 7 de la grille 2.

Pour accéder à l'ouverture 7 de la grille 2, l'élément d'obturation passe de la position verrouillée à la position déverrouillée de la manière suivante.

La deuxième pièce 24B pivote éventuellement dans la première pièce 24A et est décliquetée de la première pièce 24A à l'aide d'un outil. L'outil est par exemple une clé ou un anneau de remorquage du véhicule automobile.

Ensuite, les extrémités 29 pivotent dans les orifices 20 autour de l'axe de pivotement jusqu'à ce que la deuxième pièce 24B de l'élément d'obturation 6 soit dégagée de la première pièce 24A du logement de réception 4.

Puis, les extrémités 29 en saillie de l'élément saillant 27 sont retirées des orifices 20 par translation.

Enfin, l'élément d'obturation 6 est retiré du logement 4. L'élément d'obturation 6 n'obture alors plus l'ouverture 7 de la grille 2. Un équipement, tel qu'un organe de remorquage, peut donc être introduit ou retiré de l'ouverture 7 de la grille 2.

L'élément d'obturation 6 est donc un bandeau escamotable. La fixation de l'élément d'obturation 6 sur le logement de réception 4 est simple puisqu'elle revient à coincer les extrémités 29 de l'élément saillant 27 dans des orifices 20 du logement de réception 4 et à encliqueter la deuxième pièce 24B de l'élément d'obturation 6 avec la première pièce 24A du logement de réception 4.

Ainsi, l'élément d'obturation 6 permet d'obturer de manière réversible et esthétique l'ouverture 7 de la grille d'entrée d'air 2 et ce sans modifier la structure de la grille d'entrée d'air 2, puisque le logement de réception 4 est fixé sur la grille d'entrée d'air 2 et l'élément d'obturation 6 est fixé sur le logement de réception 4.

Bien entendu, l'homme du métier comprendra que l'invention ne se limite pas au mode de réalisation décrit sur les figures 1 à 4, ni aux exemples particuliers de la description.

## Revendications

1. Ensemble (1) d'habillage extérieur de véhicule automobile, comprenant :
- au moins une grille d'entrée d'air (2) destinée à s'étendre en travers d'une bouche d'aération d'un véhicule automobile, la grille (2) comprenant une ouverture (7),
- au moins un logement de réception (4) d'un élément extérieur, le logement (4) étant fixé sur la grille (2),
- un élément d'obturation (6) de l'ouverture (7) de la grille (2), l'élément d'obturation (6) étant mobile entre une position verrouillée dans laquelle l'élément d'obturation (6) est solidaire du logement de réception (4) et masque l'ouverture (7) de la grille (2) et une position déverrouillée dans laquelle l'élément d'obturation (6) est déplaçable par rapport au logement de réception (4), l'élément d'obturation (6) comprenant au moins un élément saillant (27), le logement de réception (4) comprenant au moins un orifice (20), l'élément saillant (27) étant retenu dans l'orifice (20) au moins dans la position verrouillée de l'élément d'obturation (6),
**caractérisé en ce que** l'orifice (20) a une forme complémentaire d'au moins une extrémité (29) de l'élément saillant (27).

2. Ensemble (1) selon la revendication 1, dans lequel dans la position déverrouillée l'élément d'obturation (6) est déplaçable en translation par rapport au logement (4).

3. Ensemble (1) selon la revendication 1 ou 2, dans lequel l'ensemble (1) comprend un organe d'encliquetage (24) de l'élément d'obturation (6) sur le logement de réception (4).

4. Ensemble (1) selon la revendication 3, dans lequel l'organe d'encliquetage (24) comprend au moins une première pièce (24A) solidaire du logement de réception (4) et au moins une deuxième pièce (24B) solidaire de l'élément d'obturation (6) et complémentaire de la première pièce (24A).

5. Ensemble (1) selon l'une quelconque des revendications 1 à 4, dans lequel le logement de réception (4) comprend un prolongement (15) couvrant au moins l'ouverture (7) de la grille (2), le prolongement (15) comprenant une embouchure (18) en regard de l'ouverture (7) de la grille (2).

6. Ensemble (1) selon la revendication 5, dans lequel, dans la position verrouillée, l'élément d'obturation (6) s'étend sur le prolongement (15) et obture l'embouchure (18).

7. Ensemble (1) selon l'une quelconque des revendications 1 à 6, dans lequel la grille (2) comprend une pluralité d'éléments de décoration (9) définissant une pluralité d'ouvertures de passage de l'air, lesdits éléments de décoration (9) formant un motif autour de l'ouverture (7) de la grille (2), l'élément saillant (27) présentant une forme sensiblement complémentaire du motif.

8. Ensemble (1) selon l'une quelconque des revendications 1 à 7, dans lequel l'élément saillant (27) comprend au moins une barre horizontale (30).

9. Procédé d'utilisation d'un ensemble d'habillage extérieur de véhicule automobile selon l'une quelconque des revendications 1 à 8, le procédé comprenant :
- pour masquer l'ouverture (7) de la grille (2), la fixation de l'élément d'obturation (6) sur le logement de réception (4) de sorte que l'élément d'obturation (6) est dans la position verrouillée, et
- pour accéder à l'ouverture (7) de la grille (2), le passage de l'élément d'obturation (6) de la position verrouillée à la position déverrouillée et le déplacement de l'élément d'obturation (6) par rapport au logement de réception (4).

## Patentansprüche

1. Einrichtung (1) zur Außenverkleidung eines Kraftfahrzeugs, aufweisend:
- wenigstens einen Lufteinlass-Grill (2), der dazu bestimmt ist, sich quer zu einer Lüftungsausmündung eines Kraftfahrzeugs zu erstrecken, wobei der Grill (2) eine Öffnung (7) aufweist,
- wenigstens ein Gehäuse zur Aufnahme (4) eines Außenelements, wobei das Gehäuse (4) an dem Grill (2) fixiert ist,
- ein Element zum Versperren (6) der Öffnung (7) des Grills (2), wobei das Versperren-Element (6) bewegbar ist zwischen einer Verriegelungsposition, in welcher das Versperren-Element (6) fest mit dem Aufnahme-Gehäuse (4) verbunden ist und die Öffnung (7) des Grills (2) abdeckt, und einer Entriegelungsposition, in welcher das Versperren-Element (6) relativ zu dem Aufnahme-Gehäuse (4) verlagerbar ist, wobei das Versperren-Element (6) aufweist wenigstens ein Vorsprungs-Element (27), wobei das Aufnahme-Gehäuse (4) aufweist wenigstens eine Öffnung (20), wobei das Vorsprungs-Element (27) in der Öffnung (20) rückgehalten ist wenigstens in der Verriegelungsposition des Versperren-Elements (6),
**dadurch gekennzeichnet, dass** die Öffnung (20) eine Form hat, die zu wenigstens einem Ende (29) des Vorsprungs-Elements (27) komplementär ist.

2. Einrichtung (1) gemäß Anspruch 1, wobei das Versperren-Element (6) in der Entriegelungsposition translatorisch verlagerbar ist relativ zu dem Gehäuse (4).

3. Einrichtung (1) gemäß Anspruch 1 oder 2, wobei die Einrichtung (1) aufweist ein Organ zum Einrastsperren (24) des Versperren-Elements (6) an dem Aufnahme-Gehäuse (4).

4. Einrichtung gemäß Anspruch 3, wobei das Einrastsperren-Organ (24) aufweist wenigstens ein erstes Stück (24A), das fest mit dem Aufnahme-Gehäuse (4) verbunden ist, und wenigstens eine zweites Stück (24B), das fest mit dem Versperren-Element (6) verbunden ist und zu dem ersten Stück (24A) komplementär ist.

5. Einrichtung (1) gemäß irgendeinem der Ansprüche 1 bis 4, wobei das Aufnahme-Gehäuse (4) einen Fortsatz (15) aufweist, der wenigstens die Öffnung (7) des Grills (2) abdeckt, wobei der Fortsatz (15) eine Mündung (18) gegenüber der Öffnung (7) des Grills (2) aufweist.

6. Einrichtung (1) gemäß Anspruch 5, wobei das Versperren-Element (6) sich in der Verriegelungsposition über dem Fortsatz (15) erstreckt und die Mündung (18) versperrt.

7. Einrichtung (1) gemäß irgendeinem der Ansprüche 1 bis 6, wobei der Grill (2) aufweist eine Mehrzahl von Dekorationselementen (9), die eine Mehrzahl von Luftdurchgangsöffnungen definieren, wobei die Dekorationselemente (9) eine Motiv um die Öffnung (7) des Grills (2) herum bilden, wobei das Vorsprungs-Element (27) eine Form hat, die im Wesentlichen komplementär zu dem Motiv ist.

8. Einrichtung (1) gemäß irgendeinem der Ansprüche 1 bis 7, wobei das Vorsprungs-Element (27) wenigstens eine horizontale Stange (30) hat.

9. Verfahren zur Verwendung einer Einrichtung zur Außenverkleidung eines Kraftfahrzeugs gemäß irgendeinem der Ansprüche 1 bis 8, wobei das Verfahren aufweist:
- zum Abdecken der Öffnung (7) des Grills (2)
, das Fixieren des Versperren-Elements (6) an dem Aufnahme-Gehäuse (4), sodass das Versperren-Element (6) in der Verriegelungsposition ist, und
- zum Zugang-Verschaffen zu der Öffnung (7) des Grills (2), das Passieren des Versperren-Elements (6) von der Verriegelungsposition in die Entriegelungsposition und das Verlagern des Versperren-Elements (6) relativ zu dem Aufnahme-Gehäuse (4).

## Claims

1. Motor vehicle exterior trim set (1), comprising:
- at least one air inlet grille (2) which is to extend across an air vent of a motor vehicle, the grille (2) comprising an opening (7),
- at least one receiving housing (4) for an exterior element, the housing (4) being fixed to the grille (2),
- a closing element (6) for the opening (7) of the grille (2), the closing element (6) being movable between a locked position in which the closing element (6) is integral with the receiving housing (4) and conceals the opening (7) of the grille (2) and an unlocked position in which the closing element (6) is displaceable relative to the receiving housing (4), the closing element (6) comprising at least one protruding element (27), the receiving housing (4) comprising at least one orifice (20), the protruding element (27) being held in the orifice (20) at least in the locked position of the closing element (6),
**characterised in that** the orifice (20) has a shape which is complementary to at least one end (29) of the protruding element (27).

2. Set (1) according to claim 1, wherein, in the unlocked position, the closing element (6) is displaceable in translation relative to the housing (4).

3. Set (1) according to claim 1 or 2, wherein the set (1) comprises a snap-fit member (24) for the closing element (6) on the receiving housing (4).

4. Set (1) according to claim 3, wherein the snap-fit member (24) comprises at least one first part (24A) integral with the receiving housing (4) and at least one second part (24B) integral with the closing element (6) and complementary to the first part (24A).

5. Set (1) according to any one of claims 1 to 4, wherein the receiving housing (4) comprises a prolongation (15) covering at least the opening (7) of the grille (2), the prolongation (15) comprising an aperture (18) opposite the opening (7) of the grille (2).

6. Set (1) according to claim 5, wherein, in the locked position, the closing element (6) extends on the prolongation (15) and closes the aperture (18).

7. Set (1) according to any one of claims 1 to 6, wherein the grille (2) comprises a plurality of decorative elements (9) defining a plurality of openings for the passage of air, said decorative elements (9) forming a pattern around the opening (7) of the grille (2), the protruding element (27) having a shape substantially complementary to the pattern.

8. Set (1) according to any one of claims 1 to 7, wherein the protruding element (27) comprises at least one horizontal bar (30).

9. Method of using a motor vehicle exterior trim set according to any one of claims 1 to 8, the method comprising:
- in order to conceal the opening (7) of the grille (2), fixing the closing element (6) on the receiving housing (4) so that the closing element (6) is in the locked position, and
- in order to access the opening (7) of the grille (2), moving the closing element (6) from the locked position to the unlocked position and displacing the closing element (6) relative to the receiving housing (4).
